# EUROPÄISCHE PATENTSCHRIFT

(11) **EP 0 564 792 B1**
(45) Veröffentlichungstag und Bekanntmachung des Hinweises auf die Patenterteilung: **20.11.1996**
(21) Anmeldenummer: 93102506.8
(22) Anmeldetag: 18.02.1993
(51) Int. Cl.: F16L 39/00, F16L 17/06, F16L 27/08

(54) **Mehrfach-Anschlussvorrichtung für Druckmedien**
Manifold connection device for pressurised fluids
Dispositif de raccordement multiple pour fluides sous pression

(30) Priorität: 08.04.1992 LU 88096
(43) Veröffentlichungstag der Anmeldung: 13.10.1993
(73) Patentinhaber: PAUL WURTH S.A., 1122 Luxembourg (LU)
(72) Erfinder: Stomp, Hubert, L-2545 Luxembourg-Howald (LU); Kremer, André, L-3345 Leudelange (LU); Fries, Daniel, B-6700 Arlon (BE); Parasch, Fred, L-4344 Esch Sur Alzette (LU)
(74) Vertreter: Freylinger, Ernest T.

(56) Entgegenhaltungen:
- DE-A- 2 233 094
- DE-C- 258 408
- FR-A- 1 495 206
- GB-A- 764 849

## Beschreibung

Die Erfindung betrifft eine Mehrfach-Anschlussvorrichtung für Druckmedien.

Sie betrifft insbesondere eine Mehrfach-Anschlussvorrichtung für Druckmedien mit einem ersten Anschlussteil mit mehreren ersten Medienöffnungen, die jeweils mit einer ersten Dichtfläche umgeben sind, einem zweiten Anschlussteil, das den ersten Medienöffnungen und den ersten Dichtflächen passend zugeordnete, zweite Medienöffnungen und zweite Dichtflächen aufweist, wobei das erste und das zweite Anschlussteil entlang einer Anschlussachse in jeweils entgegengesetzten Anschlussrichtungen gegeneinander pressbar sind, so dass die ersten Dichtflächen auf den zugeordneten zweiten Dichtflächen aufliegen.

Aus der Patentschrift US-3,972,515 ist ein Mehrfach-Anschlussvorrichtung der eingangs beschriebenen Gattung für eine metallurgische Blaslanze an einen Medienkollektor bekannt. Die Blaslanze weist dabei ein erstes Anschlussteil mit mehreren konzentrischen, ringförmigen ersten Medienöffnungen mit dazwischenliegenden, ringförmigen ersten Dichtflächen auf. Am Medienkollektor befindet sich ein zugeordnetes zweites Anschlussteil mit spiegelbildlich gleichen zweiten Medienöffnungen und Dichtflächen. Beim Anschliessen der Blaslanze an den Medienkollektor wird das erste Anschlussteil an das zweite Anschlussteil angepresst, wobei O-Ringe in den sich gegenüberliegenden, ringförmigen ersten und zweiten Dichtflächen die Druckdichtheit gewährleisten sollen.

Zum Stand der Technik gehört ebenfalls eine Mehrfach-Anschlussvorrichtung für eine metallurgische Blaslanze an einen Medienkollektor mit mehreren, versetzt angeordneten Medienanschlüssen. Eine solche Ausführung ist in der EP-A-552 440 (Stand der Technik nach Art. 54(3) EPü) offenbart. Bei dieser Vorrichtung weist die Blaslanze ein erstes Anschlussteil mit mehreren versetzt angeordneten, kreisrunden Medienöffnungen auf, welche jeweils von einer Dichtfläche umgeben sind. Am Medienkollektor befindet sich ein zugeordnetes zweites Anschlussteil mit spiegelbildlich gleichen zweiten Medienöffnungen und Dichtflächen. Beim Anschliessen der Blaslanze an den Medienkollektor wird das erste Anschlussteil an das zweite Anschlussteil angepresst, wobei O-Ringe in den sich gegenüberliegenden, ringförmigen ersten und zweiten Dichtflächen die Druckdichtheit um die Medienöffnungen gewähren sollen.

Diese Mehrfach-Anschlussvorrichtungen haben jedoch den Nachteil, dass der Anpressdruck zwischen den zugeordneten ersten und zweiten Dichtflächen sehr unterschiedlich ausgebildet sein kann. Selbst sehr kleine Niveaufehler bei der Anordnung der Dichtflächen bedingen nämlich sehr grosse Unterschiede im Anpressdruck. Nun sind jedoch solche kleinere Niveaufehler besonders bei versetzt angeordneten Medienöffnungen schwer zu vermeiden, was unweigerlich zu Dichtheitsproblemen führt, besonders wenn die Dichtflächen Medien mit höheren Drücken abdichten müssen.

Es ist deshalb Aufgabe der Erfindung, die Voraussetzungen für die Druckdichtheit zwischen den zugeordneten ersten und zweiten Dichtflächen in einer Mehrfach-Anschlussvorrichtung der eingangs beschriebenen Gattung wesentlich zu verbessern.

Diese Aufgabe wird erfüllt dadurch, dass bei zwei einander zugeordneten ersten und zweiten Medienöffnungen für ein Druckmedium, mindestens eine der beiden entsprechenden ersten und zweiten Dichtflächen als Stirnseite eines Rings ausgebildet ist, dass dieser Ring parallel zur Anschlussachse und relativ zum jeweiligen Anschlussteil gegen ein, axial in Anschlussrichtung des jeweiligen Anschlussteils wirkendes, elastisches Element verschiebbar ist, und dass der Ring eine erste Druckfläche für das Druckmedium aufweist, deren Netto-Projektionsfläche parallel zur Anschlussachse dem Druck in Anschlussrichtung des jeweiligen Anschlussteils ausgesetzt ist.

Beim Gegeneinanderpressen des ersten und zweiten Anschlussteils entlang der Anschlussachse kommen die Dichtflächen der Ringe in Kontakt mit den jeweils gegenüberliegenden Dichtflächen und werden axial gegen das jeweils in Anschlussrichtung elastische Element verschoben. Dabei stellt sich ein Anpressdruck zwischen den Dichtflächen ein, welcher durch die Weg/Kraft-Kennlinie des elastischen Elements bestimmt wird.

Wird jetzt der Anschluss mit dem Druckmedium beaufschlagt, so verstärkt sich der Anpressdruck zwischen den Dichtflächen noch dadurch, dass das Druckmedium auf die erste Druckfläche am Ring einwirkt und letzteren mit seiner Dichtfläche gegen die gegenüberliegende Dichtfläche anpresst.

Die mit der Erfindung erzielten Vorteile bestehen insbesondere darin, dass selbst grössere Niveauunterschiede zwischen zugeordneten ersten und zweiten Dichtflächen automatisch beim Gegeneinanderpressen des ersten und des zweiten Anschlussteils kompensiert werden, und dass die Anpresskraft zwischen diesen ersten und zweiten Dichtflächen jeweils mit dem Druck des abzudichtenden Druckmediums zunimmt. Selbst grössere Niveauunterschiede zwischen den zugeordneten Dichtflächen haben deshalb keine negative Auswirkung auf das Abdichtresultat. Weiterhin ist durch die Druckabhängigkeit der Anpresskraft zwischen den zugeordneten Dichtflächen, eine ausgezeichnete Abdichtung in allen Betriebszuständen gewährleistet.

In einer vorteilhaften Ausgestaltung grenzt ein elastisch verformbares Dichtelement, zum Beispiel ein O-Ring, zwischen der ersten und zweiten Dichtflächen eine innere Ringfläche auf der Stirnseite des Rings ab. Die Projektionsfläche dieser inneren Ringfläche parallel zur Anschlussachse ist dabei wesentlich kleiner als die Netto-Projektionsfläche parallel zur Anschlussachse der ersten Druckfläche, so dass der Ring einer resultierenden Druckkraft im Anschlussrichtung des jeweiligen Anschlussteiles ausgesetzt ist.

In einer weiteren Ausgestaltung der Erfindung ist der Ring mit der Dichtfläche axial in eine Führungsbohrung, die in eine Dichtbüchse mündet, montiert. Dabei ist zwischen Aussenwand des Rings und Führungsbohrung mindestens ein ringförmiges Dichtelement angebracht.

Das in Anschlussrichtung des jeweiligen Anschlussteils wirkende, elastische Element ist zum Beispiel eine Druckfeder, welche zwischen den Ring und die Dichtbüchse eingespannt ist. Anstelle der Druckfeder kann natürlich jedes andere Konstruktionselement zur Anwendung gelangen, welches die Fähigkeit aufweist, Arbeit während dem axialen Verschieben des Rings beim Gegeneinanderpressen der ersten und zweiten Anschlussteile zu speichern, und diese zur Rückführung des Rings in seine Ausgangslage beim Lösen der Anschlussteile, ganz oder teilweise wiederabzugeben.

Ein Ausführungsbeispiel der Erfindung ist in den Zeichnungen dargestellt und wird im folgenden näher beschrieben. Es zeigen :
- Figur 1, eine Draufsicht auf einen ersten Anschlussteil einer Mehrfach-Anschlussvorrichtung mit mehreren versetzt angeordneten Medienöffnungen;
- Figur 2, eine Draufsicht auf einen, dem ersten zugeordneten, zweiten Anschlussteil;
- Figur 3, einen Schnitt durch eine Medienöffnung in dem ersten Anschlussteil der Figur 1 und durch eine zugeordnete Medienöffnung in dem zweiten Anschlussteil nach Figur 2 vor dem eigentlichen Anschlussvorgang;
- Figur 4, die gleichen Teile wie in Figur 3 nach Abschluss des Anschlussvorgangs zwischen dem ersten und zweiten Anschlussteil.

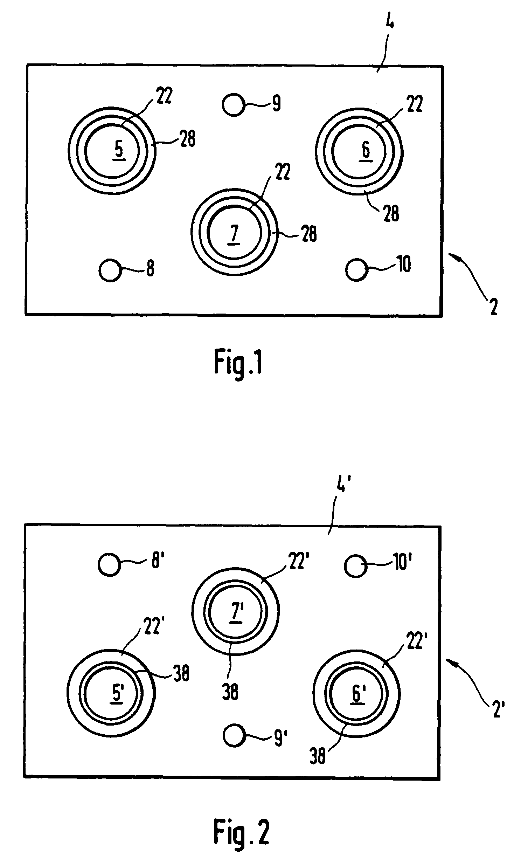

Die Figur 1 zeigt eine Draufsicht auf ein erstes Anschlussteil 2. Dieses erstes Anschlussteil 2 weist eine Montageplatte 4 auf. In der Montageplatte 4 sind drei erste Medienöffnungen 5, 6, 7 versetzt angeordnet. Zentrierzapfen 8, 9, 10 stehen senkrecht von der Montageplatte 4 ab.

Die Figur 2 zeigt eine Draufsicht auf ein, dem ersten zugeordneten, zweites Anschlussteil 2'. Dieses weist eine Montageplatte 4' auf. In die Montageplatte 4' sind, spiegelbildlich zu den drei ersten Medienöffnungen 5, 6, 7, drei zweite Medienöffnungen 5', 6', 7' angeordnet. Spiegelbildlich zu den Zentrierzapfen 8, 9, 10 befinden sich in der Montageplatte 4' Zentrieröffnungen 8', 9', 10'. Die Anschlussachse der ersten und zweiten Anschlussteile 2 und 2' ist senkrecht zu den Oberflächen der Montageplatten 4 und 4'.

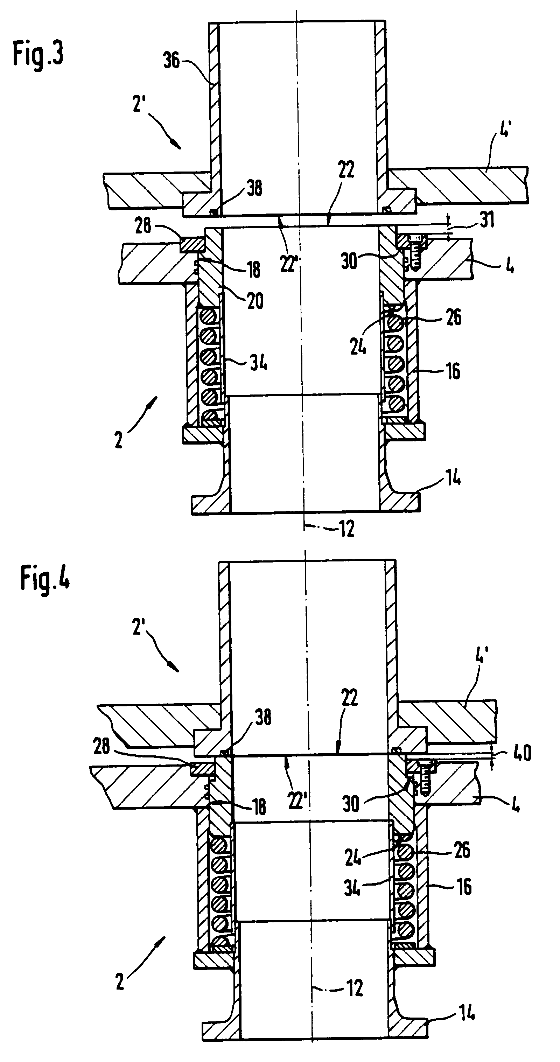

Die Figur 3 zeigt einen Schnitt durch eine der Medienöffnungen 5, 6, 7 in dem Anschlussteil 2 und durch die zugeordnete Medienöffnung 5', 6', 7' in dem Anschlussteil 2'. In dem ersten Anschlussteil 2 ist ein Anschlusstuzen 14, über eine zylindrische Dichtbüchse 16, mit der Unterseite der Montageplatte 4 verbunden. Die Bohrung in der Dichtbüchse 16 ist dabei fluchtend mit einer gleichgrossen Führungsbohrung 18, durch die Montageplatte 4, angeordnet. Führungsbohrung 18 und Dichtbüchse 16 sind koaxial mit einer Achse 12, welche senkrecht zur Oberfläche der Platte 4 also parallel zur Anschlussachse ist, und bilden eine axiale Führung für einen Ring 20. Dieser Ring 20 weist eine erste Stirnfläche 22 auf, welche aus der Bohrung 18 über die Deckplattenoberfläche hervorragt und eine erste Dichtfläche 22 ausbildet. Eine zweite Stirnfläche 24 des Rings 20 befindet sich innerhalb der Dichtbüchse 16 und ist der Druckkraft einer Druckfeder 26 ausgesetzt, welche zwischen Dichtbüchse 16 und Ring 20 angeordnet ist. Eine, auf die Montageplatte 4 aufgeschraubte, Scheibe 28 bildet einen Anschlag für eine Schulter 30 am Aussenmantel des Rings 20, so dass die maximale Ausdehnung der Druckfeder axial begrenzt ist. Die Referenzzahl 31 zeigt den Überstand des Rings 20 über die Oberfläche der Scheibe 28. Eine Hülse 34, welche am Ring 20 befestigt ist und mit Spiel auf den Stutzen 14 ausgesteckt ist, trennt eine ringförmige Federkammer in der Dichthülse ab.

Im zweiten Anschlussteil bildet ein Rohrstutzen 36 eine ringförmige zweite Dichtfläche 22' aus, welche der ersten Dichtfläche 22 parallel gegenüberliegt und über die Oberfläche der Montageplatte 4' herausragt. Diese zweite Dichtfläche ist vorteilhaft mit einem O-Ring 38 versehen, welcher auf der Dichtfläche 22' eine innere Ringfläche und eine äussere Ringfläche abgrenzt.

Werden das erste und das zweite Anschlussteil 2 und 2' entlang der Anschlussachse 12 aufeinander zubewegt, so kommt die Dichtfläche 22' in Kontakt mit der Dichtfläche 22, und der Ring 20 wird, durch die Anpresskraft mit der die beiden Anschlussteile 2 und 2' gegeneinandergepresst werden, gegen die Druckfeder 20, axial in die Dichthülse 16 geschoben. In Figur 4 ist, nach Abschluss des Anschlussvorgangs, die Dichtfläche 22 des Rohrstutzens 36 in Kontakt mit der Dichtfläche 22 des Rings 20. Zwischen der Oberfläche der Scheibe 28 und der Dichtfläche 20 befindet sich noch, in dem gezeigten Beispiel, ein merkliches Spiel 40. Dieses Spiel 40 kann bei den anderen Medienöffnungen grösser oder kleiner sein. Es kann gegebenenfalls auch gleich null sein, das heisst, die jeweilige zweite Dichtfläche 22' kann mit ihrer äusseren Ringfläche auf der Oberfläche der Scheibe 28 aufliegen. In allen Fällen wird der Anpressdruck zwischen der Dichtfläche 22 und der Dichtfläche 22', mit dem O-Ring 38, durch die axiale Verformung der Druckfeder 16 bestimmt. Die Grösse dieser axialen Verformung ist gleich der Differenz zwischen dem ursprünglichen Überstand 31 und dem Spiel 40.

Wird nun der entsprechende Anschluss mit einem Druckmedium beaufschlagt, wirkt der Druck einerseits auf die Stirnseite 24 des Rings 20 und anderseits auf die, vom O-Ring 38 auf der Abdichtfläche 22 abgegrenzte, innere Ringfläche. Da letzere wesentlich kleiner als die Fläche der Stirnseite 24 ist, ergibt sich eine zusätzliche Kraft, welche den Ring 20 gegen den O-Ring 38 in der Dichtfläche 22' drückt. Diese Kraft ist direkt proportional zum Druck des Druckmediums, so dass der Anpressdruck, zwischen der ersten und zweiten Dichtfläche 22 und 22', linear mit dem Druck des Druckmediums zunimmt.

Es ist selbstverständlich möglich, den Ring 20 alternativ im ersten, im zweiten oder sogar in beiden Anschlussteilen anzuordnen. Es ist weiterhin nicht unbedingt erfordert, dass die Dichtflächen 22 und 22', wie in den Zeichnungen dargestellt, Planflächen bilden und/oder in einer Ebene liegen.

## Patentansprüche

1. Mehrfach-Anschlussvorrichtung für Druckmedien mit
einem ersten Anschlussteil (2), mit mehreren ersten Medienöffnungen, die jeweils mit einer ersten Dichtfläche (22) umgeben sind,
einem zweiten Anschlussteil, das den ersten Medienöffnungen (5, 6, 7) und den ersten Dichtflächen (22) passend zugeordnete, zweite Medienöffnungen (5', 6', 7') und zweite Dichtflächen (22') aufweist,
wobei das erste und das zweite Anschlussteil (2, 2') entlang einer Anschlussachse (12) in jeweils entgegengesetzten Anschlussrichtungen gegeneinander pressbar sind, so dass die ersten Dichtflächen (22) auf den zugeordneten zweiten Dichtflächen (22') aufliegen,
**dadurch gekennzeichnet,**
dass bei zwei einander zugeordneten ersten und zweiten Medienöffnungen (5, 5'), (6, 6'), (7, 7') für ein Druckmedium, mindestens eine der beiden entsprechenden ersten und zweiten Dichtflächen (22, 22') als Stirnseite eines Rings (20) ausgebildet ist, dass dieser Ring (20) parallel zur Anschlussachse (12) und relativ zum jeweiligen Anschlussteil (2, 2') gegen ein, axial in Anschlussrichtung des jeweiligen Anschlussteils (2, 2') wirkendes, elastisches Element (26) verschiebbar ist,
und dass der Ring (20) eine erste Druckfläche (24) für das Druckmedium aufweist, deren Netto-Projektionsfläche parallel zur Anschlussachse, dem Mediendruck in Anschlussrichtung des jeweiligen Anschlussteils (2, 2') ausgesetzt ist.

2. Mehrfach-Anschlussvorrichtung nach Anspruch 1, dadurch gekennzeichnet, dass ein elastisches Dichtelement (38), zwischen der ersten und zweiten Dichtfläche (22) und (22'), eine innere Ringfläche auf der Stirnseite des Rings abgrenzt, deren Projektionsfläche parallel zur Anschlussachse wesentlich kleiner als die Netto-Projektionsfläche parallel zur Anschlussachse der ersten Druckfläche (24) ist.

3. Mehrfach-Anschlussvorrichtung nach Anspruch 1 oder 2, dadurch gekennzeichnet, dass der Ring (20) mit der Druckfläche (24) axial in eine Führungsbohrung (18) montiert ist, welche in eine Dichtbüchse (16) mündet.

4. Mehrfach-Anschlussvorrichtung nach Anspruch 3, dadurch gekennzeichnet, dass zwischen Aussenwand des Rings (20) und der Führungsbohrung (18), mindestens ein ringförmiges Dichtelement angebracht ist.

5. Mehrfach-Anschlussvorrichtung nach Anspruch 4, dadurch gekennzeichnet, dass das in Anschlussrichtung wirkende elastische Element (26) eine Druckfeder ist, welche zwischen den Ring (20) und die Dichtbüchse (16) eingespannt ist.

6. Mehrfach-Anschlussvorrichtung nach einem der Ansprüche 1 bis 5, dadurch gekennzeichnet, dass das erste Anschlußteil (2) Teil einer metallurgischen Blaslanze ist, und das zweite Anschlußteil (2') Teil eines Medienkollektors zum Versorgen der Blaslanze mit Druckmedien ist.

## Claims

1. Multiple connection device for pressurised fluids with a first connector block (2), with a number of first fluid ports, each of which is surrounded by a first sealing face (22),
a second connector block, that exhibits second fluid ports (5', 6', 7') and second sealing faces (22') associated with and matching up to the first fluid ports (5, 6, 7) and the first sealing faces (22),
where the first and the second connector blocks (2, 2') can each be pressed together along a connecting axis (12), in opposing connection directions, so that the first sealing faces (22) seat on the associated second sealing faces (22'),
characterised in that,
in the case of two associated first and second fluid ports (5, 5'), (6, 6'), (7, 7') for a pressurised fluid, at least one of the two corresponding first and second sealing faces (22, 22') is configured as the end face of a ring (20), that this ring (20) can be moved, parallel to the connecting axis (12) and relative to the connector block (2, 2') in question, axially against an elastic element (26) acting in the direction of connection of the connector block (2, 2') in question,
and that the ring (20) exhibits a first pressure face (24) for the pressurised fluid, whose net surface area, projected parallel to the connecting axis, is exposed to the fluid pressure in the direction of connection of the connector block (2, 2') in question.

2. Multiple connection device in accordance with claim 1, characterised in that an elastic seal element (38) between the first and second sealing faces (22) and (22') demarcates an inner annular surface on the end face of the ring, whose surface area, projected parallel to the connecting axis, is significantly smaller than the net surface area of the first pressure face (24), projected parallel to the connecting axis.

3. Multiple connection device in accordance with claim 1 or 2, characterised in that the ring (20) with the pressure face (24) is mounted into a guide bore (18) that leads into a sealing box (16).

4. Multiple connection device in accordance with claim 3, characterised in that at least one annular seal element is fitted between the outer wall of the ring (20) and the guide bore (18).

5. Multiple connection device in accordance with claim 4, characterised in that the elastic element acting in the direction of connection (26) is a compression spring, that is fitted between the ring (20) and the sealing box (16).

6. Multiple connection device in accordance with one of the claims 1 to 5, characterised in that the first connector block (2) is part of a metallurgical blowing lance, and the second connector block (2') is part of a fluids collector to supply the blowing lance with pressurised fluids.

## Revendications

1. Dispositif de raccordement multiple pour fluides sous pression, comportant
une première pièce de raccordement (2) avec plusieurs premiers orifices de fluides qui sont entourés chacun d'une première surface d'étanchéité (22),
une deuxième pièce de raccordement qui présente des deuxièmes orifices de fluides (5', 6', 7') et des deuxièmes surfaces d'étanchéité (22') affectés avec précision aux premiers orifices de fluides (5, 6, 7) et aux premières surfaces d'étanchéité (22),
la première et la deuxième pièce de raccordement (2, 2') pouvant être appuyées l'une contre l'autre le long d'un axe de raccordement (12) suivant des sens de raccordement à chaque fois opposés, de sorte que les premières surfaces d'étanchéité (22) reposent sur les deuxièmes surfaces d'étanchéité (22') affectées,
caractérisé en ce que
dans le cas de deux premiers et deuxièmes orifices de fluides (5, 5'), (6, 6'), (7, 7') affectés l'un à l'autre pour un fluide sous pression, au moins l'une des deux premières et deuxièmes surfaces d'étanchéité (22, 22') correspondantes est réalisée sous forme de face d'un anneau (20), en ce que cet anneau (20) est déplaçable, parallèlement à l'axe de raccordement (12) et par rapport à la pièce de raccordement (2, 2') respective, contre un élément élastique (26) agissant axialement dans le sens de raccordement de la pièce de raccordement (2, 2') respective
et en ce que l'anneau (20) comporte une première surface de pression (24) pour le fluide sous pression, dont la surface nette de projection parallèle à l'axe de raccordement est soumise à la pression des fluides dans le sens de raccordement de la pièce de raccordement (2, 2') respective.

2. Dispositif de raccordement multiple selon la revendication 1, caractérisé en ce qu'un élément d'étanchéité élastique (38), entre la première et la deuxième surface d'étanchéité (22) et (22'), définit une surface annulaire intérieure sur la face de l'anneau, dont la surface de projection parallèle à l'axe de raccordement est nettement inférieure à la surface nette de projection parallèle à l'axe de raccordement de la première surface de pression (24).

3. Dispositif de raccordement multiple selon l'une des revendications 1 ou 2, caractérisé en ce que l'anneau (20) avec la surface de pression (24) est monté axialement dans un alésage de guidage (18), lequel débouche dans une douille d'étanchéité (16).

4. Dispositif de raccordement multiple selon la revendication 3, caractérisé en ce qu'au moins un élément d'étanchéité annulaire est placé entre la paroi extérieure de l'anneau (20) et l'alésage de guidage (18).

5. Dispositif de raccordement multiple selon la revendication 4, caractérisé en ce que l'élément élastique (26) agissant dans le sens de raccordement est un ressort à pression qui est enserré entre l'anneau (20) et la douille d'étanchéité (16).

6. Dispositif de raccordement multiple selon l'une quelconque des revendications 1 à 5, caractérisé en ce que la première pièce de raccordement (2) fait partie d'une lance de soufflage métallurgique et en ce que la deuxième pièce de raccordement (2') fait partie d'un collecteur de fluides destiné à alimenter la lance de soufflage avec des fluides sous pression.
